# EUROPÄISCHE PATENTSCHRIFT

(11) **EP 4 446 256 B1**
(45) Veröffentlichungstag und Bekanntmachung des Hinweises auf die Patenterteilung: **08.10.2025**
(21) Anmeldenummer: 23167580.2
(22) Anmeldetag: 12.04.2023
(51) Int. Cl.: B65G 1/137, B65G 17/48, B65G 47/34

(54) **TASCHE FÜR EINEN HÄNGEFÖRDERER UND ENTSPRECHENDER HÄNGEFÖRDERER**
BAG FOR AN OVERHEAD CONVEYOR AND CORRESPONDING OVERHEAD CONVEYOR
POCHE POUR CONVOYEUR AÉRIEN ET CONVOYEUR AÉRIEN CORRESPONDANT

(43) Veröffentlichungstag der Anmeldung: 16.10.2024
(73) Patentinhaber: BEUMER Group GmbH & Co. KG, 59269 Beckum (DE)
(72) Erfinder: Pöltl, Gernot, 8051 Graz (AT); Rindler, Georg, 8200 Albersdorf-Prebuch (AT); Wiesenhofer-Hahn, Stefan, 8301 Lassnitzhöhe (AT)
(74) Vertreter: Angerhausen, Christoph

(56) Entgegenhaltungen:
- EP-A1- 2 130 968
- DE-A1- 102021 003 096
- US-A1- 2021 047 127

## Beschreibung

Die Erfindung geht aus von einer Tasche für einen Hängeförderer, welche zwei Taschenwände aufweist, die an einem Taschenboden lösbar miteinander verbunden sind, wobei die Tasche zumindest eine Stellmechanik zum Lösen der am Taschenboden verbundenen Taschenwände voneinander zum Ausbilden einer Entladeöffnung aufweist, wobei die Tasche ein Betätigungsmittel aufweist, welches dazu eingerichtet ist, in Reaktion auf ein entsprechendes Signal, typischerweise ein Datensignal, die zumindest eine Stellmechanik so zu betätigen, so dass der Taschenboden geöffnet wird, wobei das Betätigungsmittel einen Aktor zum Betätigen der zumindest einen Stellmechanik und eine mit dem Aktor verbundene Steuereinheit aufweist, wobei das Betätigungsmittel einen mit der Steuereinheit verbundenen Speicher zum Speichern von zumindest einer vorbestimmten Taschenposition zum Öffnen der Tasche aufweist.

Die DE 10 2021003 096 A1, die den Oberbegriff von Anspruch 1 offenbart, offenbart eine Transporttasche für eine Förderanlage mit einer Verschlusseinrichtung im unteren Bereich zum lösbaren Verbinden der Vorderwand mit der Rückwand. Das Verriegeln der Verschlusseinrichtung erfolgt mithilfe eines Hubmagneten mit Federrückstellung. Der Hubmagnet ist mit elektrischen Kontakten verbunden, welche sich im oberen Bereich einer Aufhängeeinrichtung der Transporttasche befinden. Die reversible Schließverriegelung wird mithilfe der Feder des Hubmagnets erreicht. Für das Öffnen der Verschlusseinrichtung wird der Hubmagnet geschaltet und die reversible Schließverriegelung gelöst. Das Öffnen der Tasche erfolgt in einer entlang der Förderstrecke angeordneten Entladestation, welche entsprechende elektrische Schaltkontakte zum Betätigen des Hubmagneten aufweist.

Aus der EP 3 442 884 B1 ist eine Transporttasche für eine Fördervorrichtung bekannt, mit einer ersten und einer zweiten Taschenwand, welche an einem unteren Ende der Taschenwände reversibel aneinander koppelbare Rastleisten aufweisen, mit denen die Taschenwände zu einem Taschenboden miteinander verbindbar sind. Die Rastleisten sind im verrasteten Zustand in Richtung ihrer Längsachse parallel versetzt angeordnet. Durch Verschieben der Rastleisten in Längsrichtung werden die Rastelemente außer Eingriff von gebracht, so dass ein in der Transporttasche befindlicher Gegenstand durch die Öffnung des Taschenbodens nach unten herausfallen kann. Zum Entrasten der Leisten ist eine entlang der Förderstrecke angeordnete Entladestation vorgesehen, an welcher die Rastleisten aus ihrer Raststellung in die Entraststellung bewegt werden.

Die Entladestation weist zwei Druckstempel mit sich senkrecht zu den Rastleisten erstreckenden Andruckflächen auf, zwischen denen die Transporttasche 1 positionierbar ist, und zwischen welchen die Rastleisten gegeneinander verschoben und voneinander getrennt werden können.

Die EP 2 130 968 B1 offenbart eine Transporttasche für eine Förderanlage mit einer Tragewand, die an ihrem oberen Ende mit einem Haken und einem schwenkbaren Bügel versehen ist, und mit einer flexiblen Seitenwand, die an ihrem oberen Ende mit dem schwenkbaren Bügel verbunden ist. Die Tragewand weist an ihrem unteren Ende eine Kupplung und an ihrem oberen Ende einen Betätigungshebel zum Öffnen der Kupplung auf. Die flexible Seitenwand weist an ihrem unteren Ende Gegenkupplungsmittel zur Aufnahme in der Kupplung auf. Durch Lösen der Gegenkupplungsmittel von der Kupplung lässt sich der Taschenboden zum Entladen von in der Tasche befindlichen Artikeln öffnen. Zum Betätigen der Öffnungsmittel sind entlang einer Förderstrecke der Förderanlage mehrere an einer Förderschiene fixierte Entlade-Stationen vorgesehen. Die Entlade-Stationen weisen jeweils einen angetriebenen Auslösehebel auf, der in den Weg des Betätigungshebels verschwenkt werden kann, so dass der Taschenboden der Tasche geöffnet wird.

Die in den oben aufgeführten Druckschriften offenbarten Vorrichtungen weisen jeweils den Nachteil auf, dass diese ortsgebunden über eine extern und ortsfest installierte Öffnungseinrichtungen bzw. Entladestationen geöffnet werden müssen, so dass das Öffnen der Taschen jeweils an einem oder mehreren vordefinierten Orten entlang der Förderstrecke erfolgen muss.

Es ist daher die Aufgabe der Erfindung, eine Tasche für einen Hängeförderer und eine entsprechende Anordnung derart weiterzuentwickeln, dass das Entladen der Tasche flexibler erfolgen kann.

Die Aufgabe wird gelöst mit den Merkmalen der unabhängigen Ansprüche. Vorteilhafte Ausgestaltungen der Erfindung sind jeweils in den Unteransprüchen angegeben.

Demgemäß ist vorgesehen, dass das Betätigungsmittel ferner entweder eine Positionsbestimmungseinheit zum Bestimmen einer derzeitigen Taschenposition aufweist und/oder das Betätigungsmittel fernsteuerbar ist und das Datensignal ein Funksignal ist, wobei das Betätigungsmittel einen mit der Steuereinheit verbundenen Empfänger zum Erhalten des Funksignals aufweist und der Empfänger zum Erhalten der derzeitigen Taschenposition eingerichtet ist. Dabei ist die Steuereinheit dazu eingerichtet, bei Feststellen des Erreichens der zumindest einen vorbestimmten Taschenposition zum Öffnen der Tasche den Aktor so anzusteuern, dass durch diesen die zumindest eine Stellmechanik betätigt und der Taschenboden geöffnet wird.

Die erfindungsgemäße Tasche ermöglicht es, die Tasche während der Fahrt und an jeder beliebigen Position im System zu öffnen und zu schließen. Dadurch ist es beispielsweise möglich, Rollcontainer hintereinander aufzureihen und bei der Drüberfahrt von Taschen Artikel aus den Taschen gezielt in die Rollcontainer abzugeben. Natürlich kann dazu jede geeignete Behälterart verwendet werden, so wie andersartige Container, entsprechend eingerichtete AGVs, Endstellen etc.

Die Steuereinheit kann dazu eingerichtet sein, den Aktor so anzusteuern, dass durch diesen die zumindest eine Stellmechanik betätigt und der Taschenboden geöffnet wird. Der Aktor kann beispielsweise ein Hubmagnet oder ein vergleichbares technisches Element sein.

Es kann vorgesehen sein, dass die Steuereinheit dazu eingerichtet ist, bei oder nach bzw. im zeitlichen Kontext mit dem Erhalt des Funksignals durch den Empfänger den Aktor so anzusteuern, dass durch diesen die zumindest eine Stellmechanik betätigt und der Taschenboden geöffnet wird.

Dadurch, dass das Betätigungsmittel einen mit der Steuereinheit verbundenen Speicher zum Speichern von zumindest einer vorbestimmten Taschenposition zum Öffnen der Tasche aufweist, sowie eine Positionsbestimmungseinheit zum Bestimmen einer derzeitigen Taschenposition aufweist und/oder der Empfänger zum Erhalten der derzeitigen Taschenposition eingerichtet ist, wobei die Steuereinheit dazu eingerichtet ist, bei Feststellen des Erreichens der zumindest einen vorbestimmten Taschenposition zum Öffnen der Tasche den Aktor so anzusteuern, dass durch diesen die zumindest eine Stellmechanik betätigt und der Taschenboden geöffnet wird, kann das erfindungsgemäße Datensignal durch das Übereinstimmen der Taschen Ist-Position mit der zumindest einen vorbestimmten Taschenposition zum Öffnen der Tasche ausgegeben werden.

Ferner kann vorgesehen sein, dass die zumindest eine Stellmechanik zumindest ein Schließmittel aufweist, welches zum automatischen Verschließen des Taschenbodens nach Entladen von in der Tasche transportierter Ware eingerichtet ist bzw. sobald die Taschenwände der Tasche nach dem Entladen wieder aneinander angenähert sind. Das Schließmittel kann beispielsweise einen Klettverschluss, einen Reißverschluss, einen Schraubverschluss, einen Druckverschluss, einen Ziploc-Verschluss, einen Klickverschluss, einen Schnappverschluss, einen Rollverschluss, einen Gummibandverschluss oder einen Magnetverschluss umfassen, wobei auch Kombinationen der genannten Schließmittel vorgesehen sein können.

Es ist denkbar, dass der Taschenboden von einer Kupplung gebildet ist, mit der die Taschenwände lösbar miteinander verbunden sind, wobei jede Seitenwand eine von zwei Kupplungshälften der Kupplung aufweist. Die Kupplungshälften können als starre Leisten ausgebildet sein und sich im Wesentlichen längs der unteren Kante der jeweiligen Seitenwand erstrecken. Es kann vorgesehen sein, dass nur in einer der beiden Kupplungshälfte der Aktor und die Steuereinheit angeordnet sind und die andere Kupplungshälfte keine mechanisch verstellbaren Bauteile aufweist.

Die zumindest eine Stellmechanik kann zwischen einer Schließposition, in der die Kupplungshälften, insbesondere formschlüssig, aneinander festgelegt sind, und einer Freigabeposition, in der die Kupplungshälften voneinander gelöst sind, verstellbar sein. Ferner kann zumindest eine Stellmechanik ein durch den Aktor angesteuertes Betätigungsende aufweisen. Der Aktor kann mit dem Betätigungsende permanent gekoppelt sein oder an dieses derart anlenkbar sein, dass der Aktor in einem Betätigungszustand, also beispielsweise während des Überführens der Stellmechanik von der Schließposition in die Freigabeposition, an dem Betätigungsende anliegt, und außerhalb des Betätigungszustands von diesem separiert ist.

Das Schließmittel kann eine Rückstellfeder zum Rücküberführen der Stellmechanik in die Schließposition aufweisen. Die Wirkrichtung der Rückstellfeder kann der Wirkrichtung des Aktors entgegengesetzt sein.

Es kann vorgesehen sein, dass die zumindest eine Stellmechanik in einer der Kupplungshälften aufgenommen ist und das Betätigungsmittel in derselben oder der anderen der Kupplungshälften aufgenommen ist.

Darüber hinaus kann dem Betätigungsmittel ferner ein elektrischer Energiespeicher zum Versorgen des Betätigungsmittels mit elektrischer Energie zugeordnet sein. Der elektrische Energiespeicher kann ebenfalls in einer der Kupplungshälften angeordnet sein. Der elektrische Energiespeicher kann als Akku oder als Kondensator ausgebildet sein. Der Akku kann zum kontaktlosen, insbesondere induktiven, Laden ausgebildet sein. Die Ladekapazität des Energiespeichers kann so bemessen sein, dass diese für zumindest eine Taschenöffnung ausreicht. Alternativ kann vorgesehen sein, dass die Tasche und der Hängeförderer zumindest abschnittsweise zum kontaktlosen Übertragen von elektrischer Energie eingerichtet ist, beispielsweise durch Induktionsschienen.

Die am Taschenboden angeordnete Kupplung kann zwei, insbesondere gegenläufige, Stellmechaniken, mit jeweils einem Magnetschieber, aufweisen, und das Betätigungsmittel kann zwei Aktoren aufweisen, von welchen einer der ersten Stellmechanik und der andere der zweiten Stellmechanik zugeordnet ist. Dabei kann das Betätigungsmittel zwischen der ersten und der zweiten Stellmechanik angeordnet sein, wobei der erste der Aktoren in Richtung der ersten Stellmechanik und der zweite der Aktoren in die entgegengesetzte Richtung bzw. in Richtung der zweiten Stellmechanik wirkt. Die Aktoren, beispielsweise Hubmagnete, können dabei in entgegengesetzte Richtungen wirken, so dass die Aktoren beide entweder aufeinander zuziehend oder voneinander wegdrückend wirken.

Beispielsweise können die Kupplungshälften jeweils mindestens eines der magnetischen Elemente aufweisen, wobei die magnetischen Elemente über die Stellmechanik relativ zueinander verstellbar und in der Schließposition relativ zu der Freigabeposition weiter einander angenähert sind. Ferner können die Kupplungshälften jeweils mindestens ein magnetisches Element, vorzugsweise einen Permanentmagnet, aufweisen, die gleich gepolt und in der Freigabeposition relativ zu der Schließposition weiter einander angenähert und vorzugsweise mit ihren gleichen Polen sich gegenüberstehend angeordnet sind.

Ferner kann die Stellmechanik mindestens einen Magnetschieber aufweisen, an dem das mindestens eine magnetische Element, vorzugsweise ein Permanentmagnet, in einer der beiden Kupplungshälften angeordnet ist, wobei mit dem Magnetschieber ein Abstand dieses magnetischen Elements in Bezug auf das mindestens eine magnetische Element der anderen Kupplungshälfte verstellbar ist. Der Magnetschieber kann weiterhin einen Haken oder eine zu dem Haken komplementäre hinterschnittige Hakenaufnahme aufweisen, der/die mit dem Magnetschieber zwischen der Schließposition und der Freigabeposition verstellbar ist. Die den Magnetschieber aufweisende Kupplungshälfte kann sich entlang der Breite des Taschenbodens erstrecken, wobei der Magnetschieber in der Breitenrichtung mit einem Betätigungsende in Richtung des Aktors weist. Ferner kann die Kupplung, wenn zwei Stellmechaniken vorgesehen sind, zwei Magnetschieber aufweisen, die an in Breitenrichtung des Taschenbodens gegenüberliegenden Enden des Taschenbodens in entgegengesetzter Erstreckungsrichtung angeordnet sind. Der Magnetschieber kann in einem Gehäuse der den Magnetschieber aufweisenden Kupplungshälfte aufgenommen sein und zumindest anteilig zu einer Formschlussaufnahme der anderen Kupplungshälfte hin freiliegen. Der Magnetschieber, an dem das mindestens eine magnetische Element einer der beiden Kupplungshälften angeordnet ist, kann in der Freigabeposition eine mechanische Vorspannung in Richtung der Schließposition aufweisen. Die Kupplung kann einen Formschlussabschnitt aufweisen, in dem die beiden Kupplungshälften mit zueinander komplementären Konturen ineinandergreifen, wobei der Formschlussabschnitt zwischen der Stellmechanik und den Taschenwänden angeordnet sein kann. Der Formschlussabschnitt kann eine sich in Breitenrichtung des Taschenbodens erstreckende Nut an einer ersten der beiden Kupplungshälften und eine sich in Breitenrichtung des Taschenbodens erstreckende, in der Schließposition in die Nut eingreifende Rückstellfeder an der anderen der beiden Kupplungshälften aufweisen. Die Kupplungshälften können sich für die Bereitstellung des Formschlusses im Wesentlichen über die gesamte Breite des Taschenbodens erstrecken.

Die Erfindung betrifft ferner einen Hängeförderer mit zumindest einer Tasche nach einem der vorangehenden Ansprüche, aufweisend eine Förderstrecke, entlang welcher die Tasche bewegt wird, und eine Ansteuereinrichtung zum Aussenden eines Funksignals zum Öffnen des Taschenbodens der zumindest einen Tasche, wobei der Hängeförderer ferner eine mit der Ansteuereinrichtung verbundene Taschenverfolgungseinrichtung aufweist, welche dazu eingerichtet ist, die Position der zumindest einen Tasche entlang der Förderstrecke zu bestimmen. Dadurch kann die Ansteuereinrichtung das fernsteuerbare Betätigungsmittel zum Öffnen des Taschenbodens veranlassen, sobald die zumindest eine Tasche eine vorbestimmbare Sollposition entlang der Förderstrecke erreicht.

Die Erfindung betrifft ferner ein Verfahren zum Betreiben eines Hängeförderers nach Anspruch 15 aufweisend die Schritte:
Fördern zumindest einer Tasche entlang der Förderstrecke des Hängeförderers;
Bestimmen einer Sollposition entlang der Förderstrecke, an welcher die Tasche geöffnet werden soll;
Übersenden eines auf die Sollposition bezogenen Datensignals von der Ansteuereinrichtung an die Tasche, wobei das auf die Sollposition bezogene Datensignal entweder ein Signal zum Ansteuern des Betätigungsmittels zum Öffnen des Taschenbodens ist und bei Erreichen oder bei Annäherung an die Sollposition seitens der Ansteuereinrichtung ausgesendet wird oder dass das Datensignal eine Ortsinformation der Sollposition ist, bei deren Erreichen die Tasche autonom das Betätigungsmittel zum Öffnen des Taschenboden ansteuert;
Autonomes Öffnen des Taschenbodens an der Sollposition.

Weitere Einzelheiten der Erfindung werden anhand der nachstehenden Figuren erläutert. Dabei zeigt:
- Figur 1: ein funktionelles Ablaufschema einer aus dem Stand der Technik bekannten Ausführungsform eines Hängeförderers;
- Figur 2: ein schematisches Ablaufschema einer ersten Ausführungsform des erfindungsgemäßen Hängeförderers;
- Figur 3: ein funktionelles Ablaufschema einer zweiten Ausführungsform des erfindungsgemäßen Hängeförderers;
- Figur 4: ein funktionelles Ablaufschema einer dritten Ausführungsform des erfindungsgemäßen Hängeförderers;
- Figur 5: ein funktionelles Ablaufschema einer vierten Ausführungsform des erfindungsgemäßen Hängeförderers;
- Figur 6a: eine beispielhafte Ausführungsform der erfindungsgemäßen Tasche;
- Figur 6b: eine vergrößerte Ansicht des Taschenbodens der erfindungsgemäßen Tasche gemäß Figur a;
- Figur 7a: eine Ausführungsform des Taschenbodens in der Freigabeposition der Stellmechanik;
- Figur 7b: die Ausführungsform gemäß Figur 7a mit voneinander abgelösten Kupplungshälften;
- Figur 8a: die Ausführungsform gemäß Figur 7b mit der Stellmechanik in der Schließposition;
- Figur 8b: die Ausführungsform gemäß Figur 8a mit teilweise einander angenäherten Kupplungshälften;
- Figur 8c: die Ausführungsform gemäß Figur 8b mit vollständig einander angenäherten Kupplungshälften.

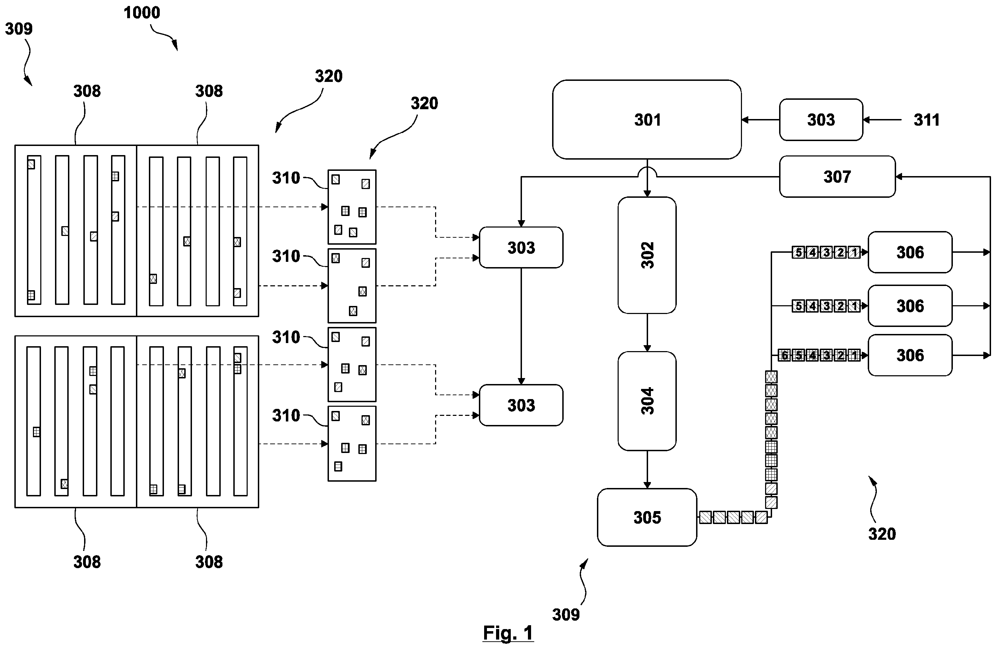

In Figur 1 ist beispielhaft ein funktionelles Ablaufschema einer Sortieranordnung 1000 mit einem aus dem Stand der Technik bekannten Hängeförderer 100 gezeigt. Diese weist im Wesentlichen einen Hängeförderer 100 auf, sowie ein Lager 309, beispielsweise ein Hochregallager, aus welchem einzelne Artikel 320 entnommen und in den Hängeförderer 100 eingespeist werden. Weitere infrage kommende Lager- oder Bereitstellungsarten können beispielsweise durch ein Blocklager, durch Fachbodenregale, Schwerkraftregale, Durchlaufregale, Palettenregale, Kragarmregale, eine Bodenlagerung, Regalbediengeräte, Horizontal-Karussell-Lagerung, Vertikal-Karussell-Lagerung, ein automatisiertes Kleinteilelager, eine Lagercontainer Freilagerung, mobile Regale oder über Shuttle-Systeme realisiert sein. Die Artikel müssen dabei nicht zwangsweise aus einem Lager kommen, sondern können beispielsweise auch aus einer automatischen / manuellen Einschleusung bei der Entladung von Containern / LKW oder auch von einem Sorter kommen. Weiterhin kann die Übergabe der Artikel über eine Schnittstelle mit einem gleich- oder andersartigen Förderer oder Sorter erfolgen. Im Hängeförderer 100 werden die Artikel 320 in einem mehrschrittigen Verfahren sortiert und letzten Endes in einer vorbestimmten Reihenfolge an Packstationen 306 ausgegeben, wo die Einzelartikel 320 entsprechend zu vordefinierten Versandaufträgen verpackt werden. Die Einzelartikel 320 werden dem Lager 309 durch eine Mehrzahl Kommissionierer 308 in Form von entsprechenden Kommissioniereinrichtungen oder in Form von Personal entnommen und die im Zuge dessen entnommenen Einzelartikel 320 jeweils in einem von einer Mehrzahl von Übergabestellen 310 gesammelt und zu einzelnen Auftragsbatches zusammengestellt, welche an den Taschensorter übergeben werden sollen. Über mehrere Beladestationen 303 werden dann die in den Übergabestellen 310 gesammelten Einzelartikel 320 in Taschen 1 des Hängeförderers 100 eingeladen, wobei die Zuordnung jedes Artikels 320 zur jeweiligen Tasche 1 gespeichert wird, solange sich der Artikel 320 auf dem Hängeförderer befindet. Die beladenen Taschen werden anschließend einem dynamischen Batch-Puffer 302 zugeführt, in welchem eine Vorsortierung der Taschen 1 vorgenommen wird. Beispielsweise kann der dynamische Batch-Puffer 302 mehrere Pufferkreise aufweisen, wobei sämtliche Taschen, die als Sortierziel derselben Packstation 306 zugeführt werden sollen, in demselben Pufferkreis vorgehalten werden, bis sie als Gruppe von Taschen mit demselben Sortierziel, etwa auf eine Anforderung hin, aus dem Pufferkreis ausgeschleust werden.

Vorzugsweise können in jedem der Pufferkreis mehrere Gruppen von Taschen, die derselben Packstation 306 zugeführt werden sollen bzw. dasselbe Sortierziel aufweisen, aufgenommen, d. h. gepuffert werden. Diese Vorsortierung in dem dynamischen Batch-Puffer 302 kann vollautomatisch anhand mindestens eines Kriteriums erfolgen. Diese Kriterien sind können die Abfahrtzeit, eine Identifikation des Spediteurs, das Gesamtvolumen der Objekte gleichen Versandziels, eine Priorisierung, eine Gewichtsklasse eine Größenklasse und/oder dergleichen betreffen. Dem dynamischen Batch-Puffer 302 ist darüber hinaus ein dynamischer Puffer 301 vorgeschaltet, welcher durch Rückläufer 311 gespeist wird, welche diesem ebenfalls über eine Beladestation 303 zugeführt werden. Es kann vorgesehen sein, dass die Rückläufer 311 dem dynamischen Batch-Puffer 302 priorisiert zugeführt werden, bevor der entsprechende Artikel 320 erneut dem Lager 309 entnommen werden muss. Ferner kann vorgesehen sein, dass jeder der Beladestationen 303 ein separater dynamischer Puffer 301 zugeordnet ist.

Die Separierung der Taschen 1 nach ihren Gruppen bzw. Sortierzielen erfolgt in einer dem dynamischen Batch-Puffer 302 fördertechnisch nachgeschalteten Sortiermatrix 304, in welcher die Taschen 1 zugeführt werden. Der Sortiermatrix 304 werden die mehreren vollständigen Gruppen von Taschen 1 desselben Sortierziels in einer willkürlichen Reihenfolge zugeführt. Die Taschen 1 verlassen die Sortiermatrix 304 nach deren Durchlaufen sortenrein, d. h. als ein kompakter Pulk von Taschen 1, wobei sämtliche einer Gruppe von Taschen 1 mit demselben Sortierziel zugeordnete Taschen 1 unmittelbar aufeinanderfolgend aus der Sortiermatrix 304 ausgeschleust werden. Die Sortiermatrix 304 ist ferner dazu eingerichtet, neben der Sortenreinheit zusätzlich eine Reihenfolge der Taschen 1 innerhalb derselben Gruppe herzustellen, mithin eine Sequenzierung der Taschen 1 zu erzeugen. Diese Sequenzierung kann beispielsweise dazu vorgesehen sein, um eine weitere Sortierstufe zu erreichen. Anschließend werden die sequenzierten Taschen 1 einem den Packstationen 306 vorgelagerten Taschenpuffer 305 zugeführt. Auf Anforderung seitens der Packstationen 306 können dabei Gruppen von sequenzierten Taschen, welche beispielsweise demselben Auftrag angehören, aus dem Taschenpuffer 305 ausgeschleust und der den Auftrag anfordernden Packstation 306 zugeführt werden. In den Packstationen 306 werden dann die Artikel 320 nach und nach den ankommenden Taschen 1 entnommen und wie vom Auftrag vorgesehen verpackt. Die leeren Taschen 1 werden dann in einem Leertaschenpuffer 307 zwischengespeichert und können von dort aus erneut den Beladestationen 303 zugeführt werden.

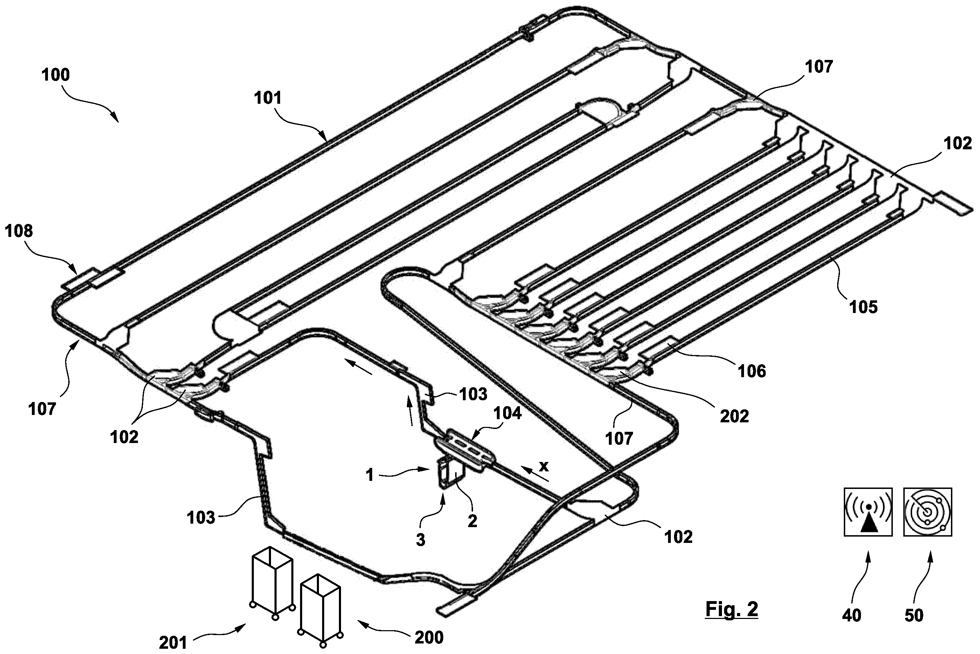

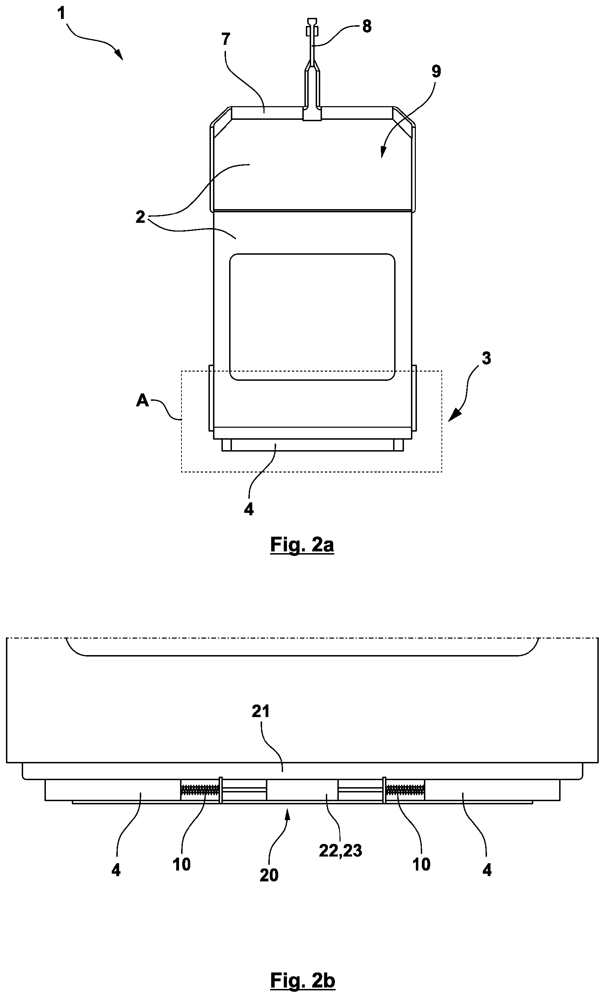

Die Fig. 2 zeigt eine beispielhafte erste Ausführungsform des erfindungsgemäßen Hängeförderers 100. Der Hängeförderer 100 besteht im Wesentlichen aus einem System aus Förderschienen 101, die beispielsweise als ein Stauförderer 105 oder als ein Transferförderer 107 ausgebildet sein können. An einem Übergang 108 zwischen einem Stauförderer 105 und einem Transferförderer 107 erfolgt die Übertragung der Taschen 1 zwischen den beiden Transportsystemen. Geeignete Systeme für einen Stauförderer 105 und einen Transferförderer 107 sind in der WO 2020/128941 A1 und in der EP 3670393 A1 beschrieben.

Für die Sequenzierung der Taschen 1, welche entlang der Förderschiene 101 transportiert sind und in einer bevorzugten Reihenfolge und zu einer bevorzugten Zeit beispielsweise einem Entladearbeitsplatz 104 oder an einem frei wählbaren Entladeort 200 beispielweise einer Mehrzahl Rollcontainern 201 zugeführt werden sollen, kann eine Sortierschleife aus einer Mehrzahl parallel zueinander geführter Stauförderer 105, die vorlaufseitig und rücklaufseitig über Weichen 102 an einen Transferförderer 107 angeschlossen sein können, bereitgestellt sein. Zur Verringerung des Footprints der Anlage können Schrägförderer 103 verwendet werden, welche einen mehretagigen Aufbau der Anlage erlauben. Überfüllsensoren 106 entlang der Staufördererstrecken 105 der Sortierschleife detektieren einen Füllstand des betreffenden Stauförderers 105, um durch geeignete Umleitung von der Sortierschleife zugeführter neuer Taschen eine Überfüllung bestimmter Stauförderstrecken 105 zu vermeiden.

Am Be- und/oder Entladearbeitsplatz 104 können die von der Tasche 1 gehaltenen Gegenstände manuell aus der Tasche entfern werden, etwa durch seitlichen Eingriff parallel zu den Taschenwänden 2 der Tasche 1. Demgegenüber kann das Entladen am gewählten Entladeort 200 automatisiert erfolgen. Am entlang der Förderstrecke befindlichen Entladeort 200 können Entladebehälter wie Rollcontainer 201 bereitstehen, in welchen die transportierte Ware entladen werden soll. Die Orte sämtlicher entlang des Hängeförderers 100 transportierter Taschen 1 werden in Echtzeit mittels einer Taschenverfolgungseinrichtung 50 erfasst. Sobald eine zu entladende Tasche 1 den Entladeort 200 erreicht, signalisiert die Taschenverfolgungseinrichtung 50 eine dieses Ereignis betreffende Information an eine Ansteuereinrichtung 40, welche daraufhin ein Öffnungssignal an die fernsteuerbare Betätigungseinrichtung der Tasche übermittelt. Dort wird das Signal mittels des Empfängers erhalten und an die Steuereinheit übermittelt, welches daraufhin den Aktor zum Öffnen der Öffnungseinrichtung ansteuert. Dadurch wird der Taschenboden 3 geöffnet und die Waren in die dafür vorgesehenen Rollcontainer 201 entladen.

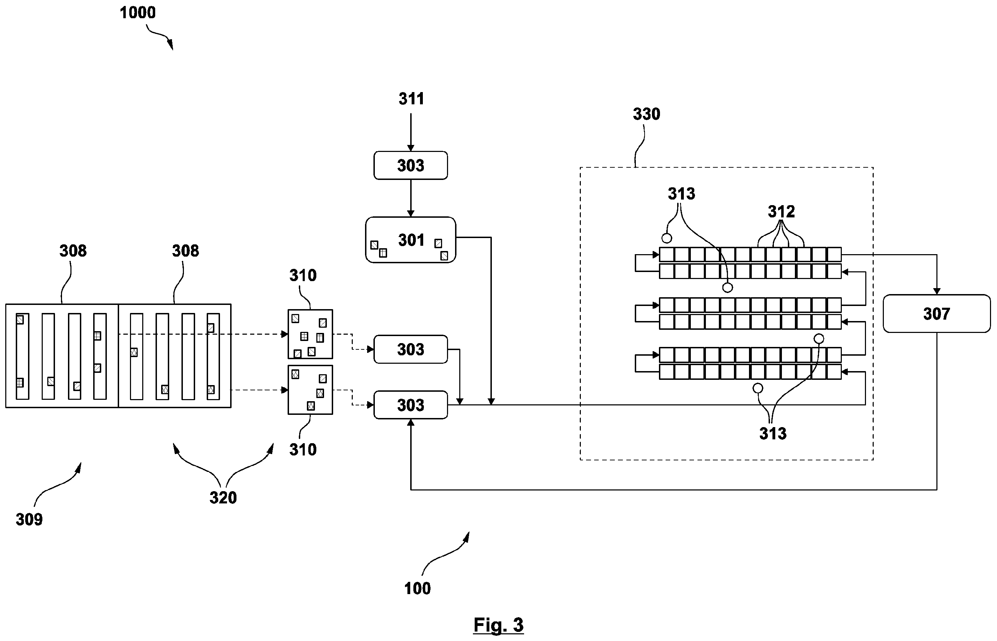

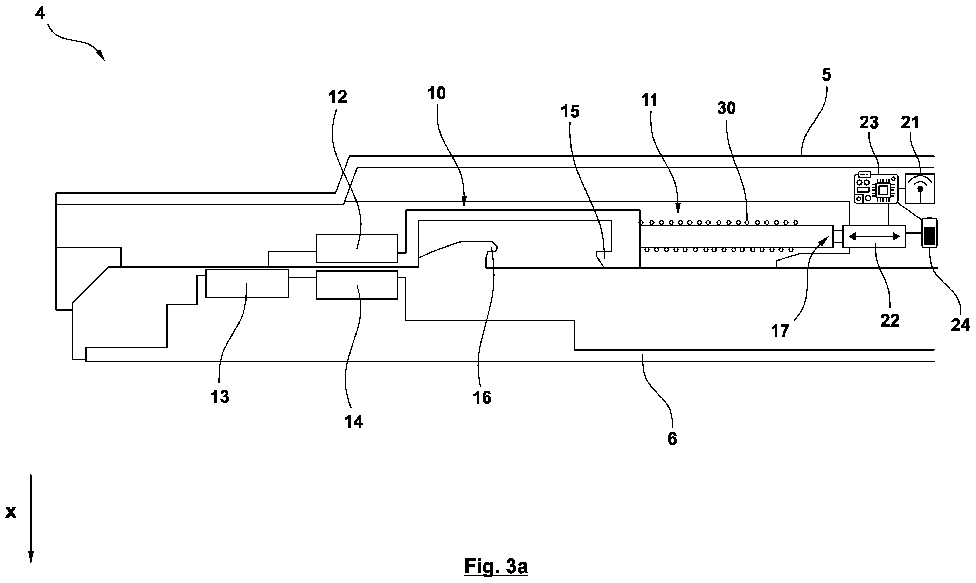

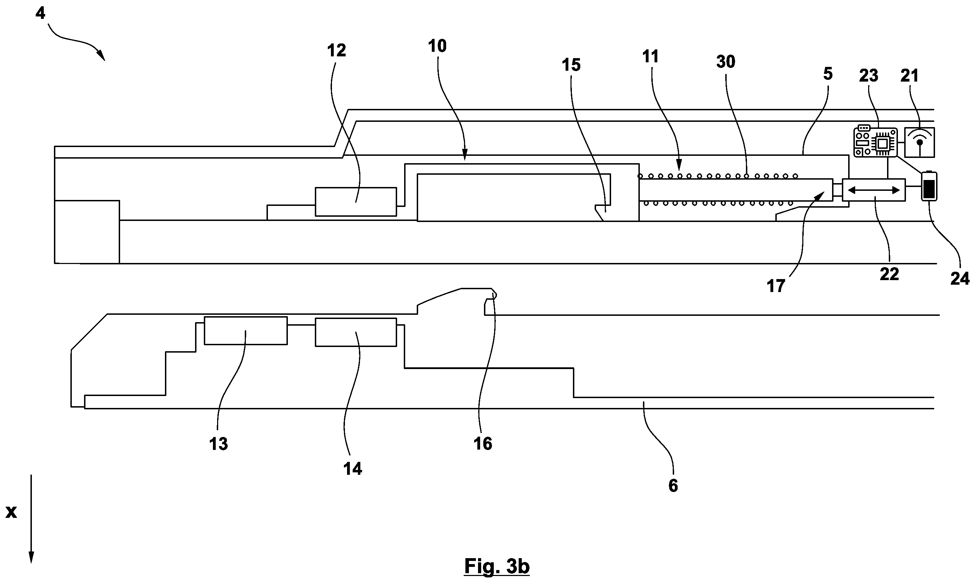

Fig. 3 zeigt eine Sortieranordnung 1000 mit einer ersten Ausführungsform des erfindungsgemäßen Hängeförderers 100. Dieser verzichtet gegenüber dem in Fig. 2 gezeigten Hängeförderer 100 keinen dynamischen Batch-Puffer 302, keine Sortiermatrix 304, keinen Taschenpuffer 305 und keine Packstationen 306 zum sequentiellen Entladen der Taschen 1 auf. Stattdessen ist ein Endstellenmodul 330 vorgesehen, welches unmittelbar den Beladestationen 303 und dem dynamischen Puffer 301 nachgeschaltet ist. Das Endstellenmodul 330 stellt einen Förderstreckenabschnitt bereit, entlang welches eine Mehrzahl Endstellen 312 positioniert sind, welche beispielsweise durch Mittel zum Aufnehmen der Einzelartikel 320 bereitgestellt sein können, wie Behälter oder Kartons jedweder Art, beispielsweise Rollcontainer/ Container etc., aber auch AGV mit Ladefläche, Förderbänder usw.. Entlang dieses Förderstreckenabschnitts werden die Taschen 1 entlanggeführt, bis diese eine vorbestimmte Endstelle 312 erreichen und an dieser die geladenen Artikel 320 entladen. Sobald sämtliche Taschen 1 eines Auftrags die für diesen zugewiesene Endstelle passiert haben und der jeweilige Tascheninhalt an dieser entleert wurde, wird der entsprechende Behälter mittels eines autonomen mobilen Roboters 313 weggefahren und ein neuer Leerbehälter an der Endstelle 312 positioniert. Dadurch, dass gleichzeitig eine Vielzahl von Endstellen 312 vorgesehen ist und jede Endstelle 312 von jeder der Taschen 1 passiert wird, kann auf eine vorherige Sortierung und Sequenzierung der Taschen 1 vollständig verzichtet werden. Mittels des erfindungsgemäßen, in jede Tasche integrierten, Taschenöffnungsmechanismus ist es möglich, die Taschen 1 durch entsprechende Ansteuerung an jeder beliebigen Stelle entlang der Förderstrecke des Endstellmoduls 330 zu öffnen. Selbstverständlich ist der Bereich zum Öffnen der Taschen nicht auf das Endstellenmodul 330 beschränkt, sondern das Öffnen kann an jedem beliebigen Ort entlang des Hängeförderers 100 erfolgen. Über einen dem Endstellenmodul 330 nachgeschalteten Leertaschenpuffer werden die Taschen 1 entsprechend zu der in Figur 2 gezeigten Anordnung wieder der Beladung zur Verfügung gestellt.

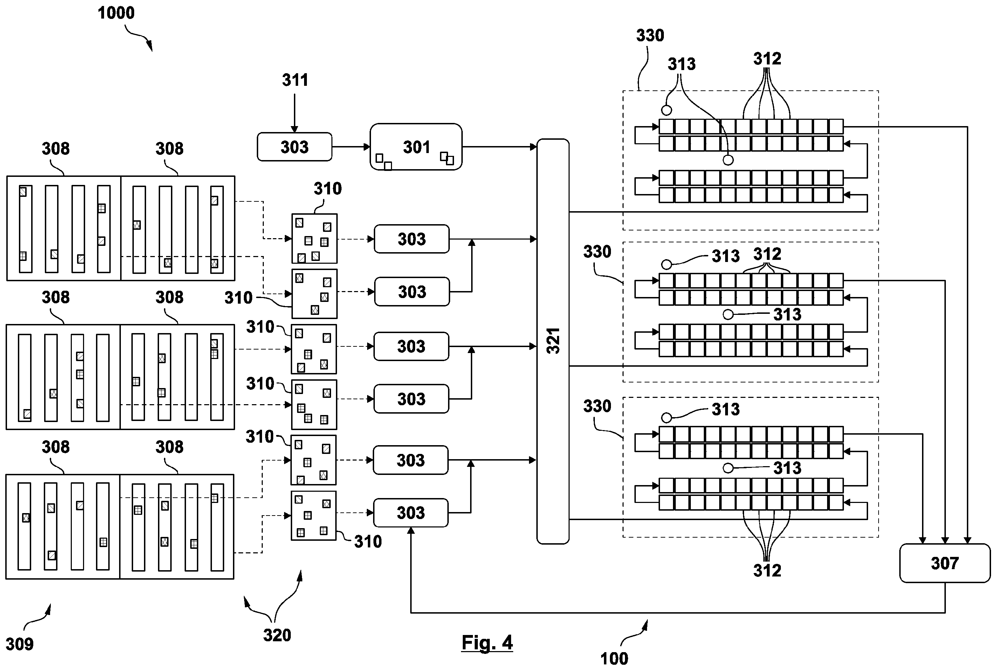

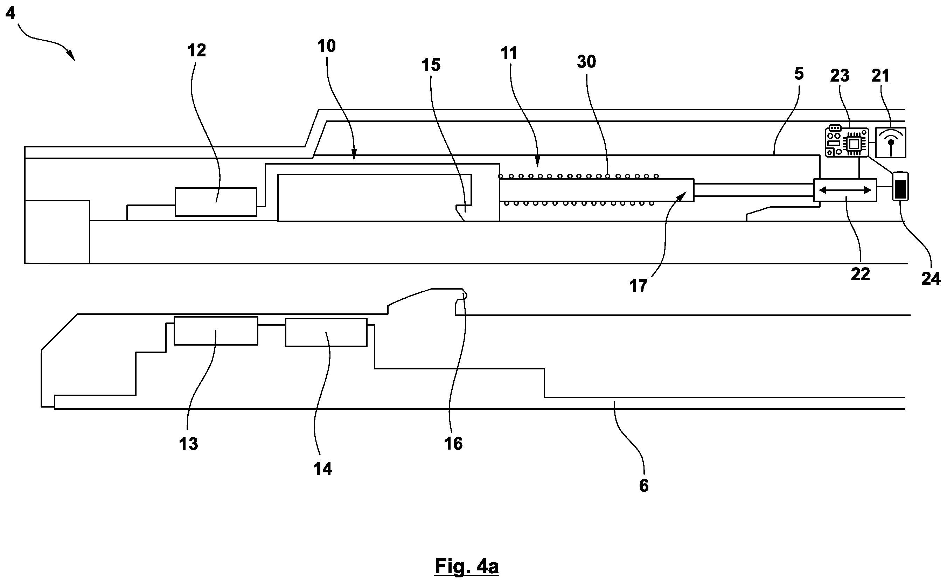

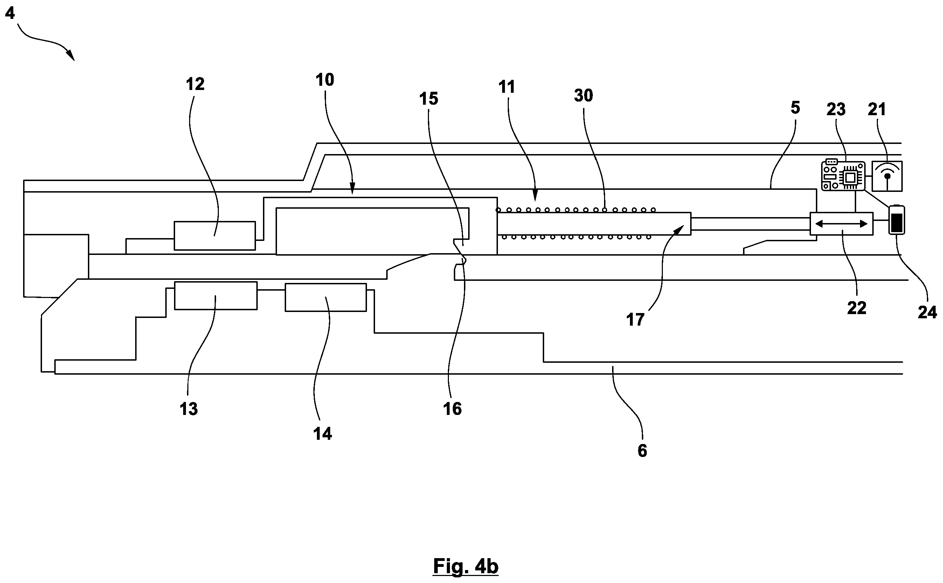

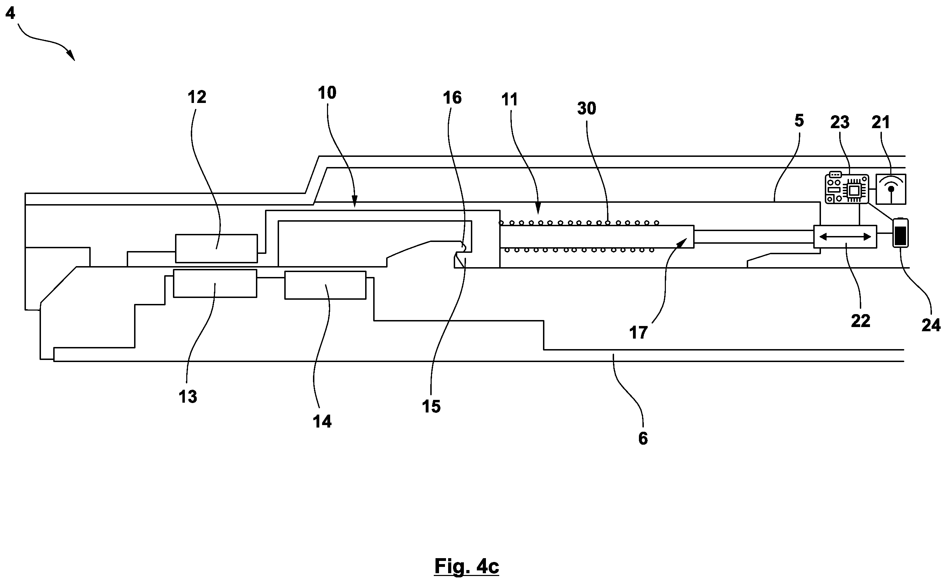

Die in Fig. 4 gezeigte Anordnung 1000 ist eine gegenüber der Anordnung aus Fig. 3 hochskalierte Anordnung, welche zum Verarbeiten einer demgegenüber um den Faktor 3 größeren Taschenanzahl eingerichtet ist. Der wesentliche Unterschied besteht zum einen darin, dass die dargestellte Anordnung drei separate Endstellenmodule 330 mit jeweiligem Förderstreckenabschnitt aufweist, und zum anderen darin, dass den drei parallelen Endstellenmodulen 330 eine Zuordnungsmatrix 321 vorgeschaltet ist, über welche die Taschen 1 in das vorgesehene Endstellenmodul 330 ausgeschleust werden. Die Zuordnungsmatrix 321 ist unmittelbar den Beladestationen 303 und dem dynamischen Puffer 301 nachgeschaltet und weist eine entsprechende Anzahl an Eingängen auf und für jedes der Endstellenmodule 330 einen separaten Ausgang auf.

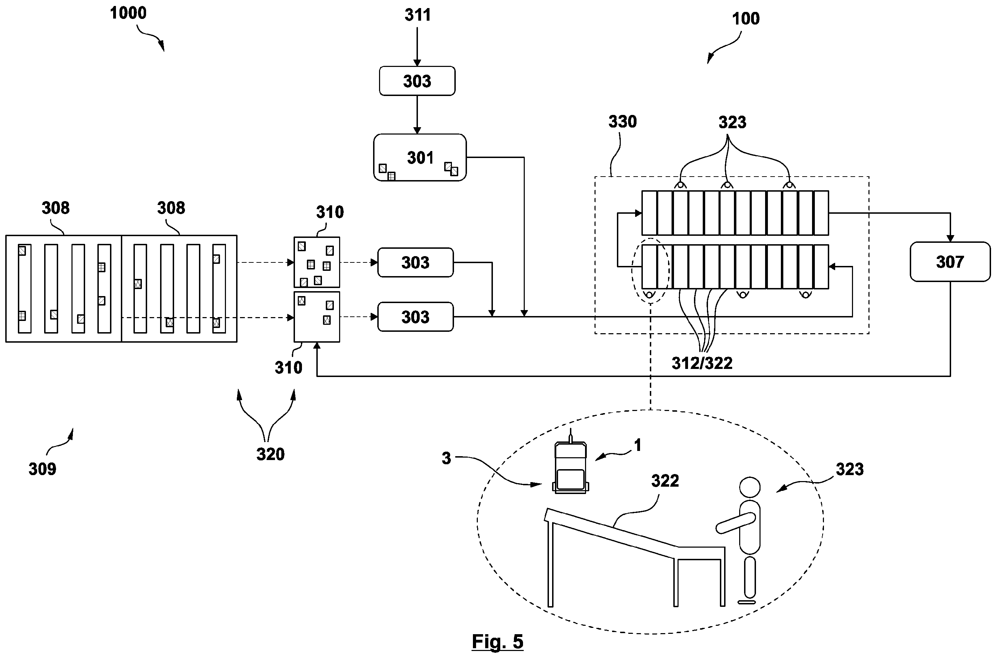

Das in Fig. 5 gezeigte Endstellenmodul 330 weist gegenüber den in den Figuren 3 und 4 gezeigten Endstellenmodulen 330 den Unterschied auf, dass bei diesem die Endstellen 312 nicht durch Behälter gebildet sind, in welche das transportierte Fördergut unmittelbar abgegeben wird, sondern durch jeweilige Rutschen 322, auf welche die Einzelartikel 320 abgeworfen werden und entlang welcher die Artikel in Richtung eines manuell bedienten Packplatzes herabrutschen. Alternativ können auch anstelle oder ergänzend zu den Rutschen Zwischenspeicher vorgesehen sein, in welchen die Artikel, beispielsweise Pakete oder Boxen zwischengespeichert werden können. Die dort ankommenden Artikel 320 werden am Packplatz durch einen Packarbeiter 323 auftragsgemäß verpackt. Es kann vorgesehen sein, dass jeder Packarbeiter 323 einer Mehrzahl von Rutschen 322 zugewiesen ist. Ferner kann vorgesehen sein, dass an jeder der Rutschen ein Signalmittel, beispielsweise eine grün aufleuchtende Lampe, installiert ist, mittels welchem ein Packarbeiter 323 darauf aufmerksam gemacht werden kann, dass sämtliche Artikel 320 eines Auftrags an der vorbestimmten Rutsche 322 angekommen sind.

Die Fig. 6a zeigt eine Gesamtansicht einer Fördertasche 1, Fig. 6b eine Detailansicht A einer Kupplung 4 eines Taschenbodens der Fördertasche aus Fig. 6a. Die Tasche 1 weist zwei Taschenwände 2 auf, die am unteren Ende zu einem Taschenboden 3 miteinander verbunden sind und am oberen Ende durch einen Bügel 7 gehalten sind, welcher zum einen eine Beladeöffnung 9 bereitstellt und zum anderen zum Aufhängen der Tasche 1 an einem Rollcarrier 8 zum Bewegen entlang einer Schiene des Hängeförderers 100 aufweist. Am unteren Ende jeder der Taschenwände 2 ist jeweils eine der Kupplungshälften 5 befestigt, welche mittels zweier Stellmechaniken 10 lösbar miteinander verrastet sind. Mittig in einer der Kupplungshälften 5 zwischen den beiden Stellmechaniken 20 ist ein fernsteuerbares Betätigungsmittel 20 angeordnet, welches einen Empfänger 21 zum Erhalten eines Funksignals zum Erhalten eines Öffnungssignals, einen Aktor 22 zum Betätigen der linken und einen Aktor 22 zum Betätigen der rechten Stellmechanik sowie eine mit dem Empfänger 21 und den Aktoren 22 jeweils verbundene Steuereinheit 23 aufweist. Die Steuereinheit ist dazu eingerichtet, bei oder nach Erhalt des Funksignals durch den Empfänger 21 die beiden Aktoren 22 so anzusteuern, dass durch diese die jeweiligen Stellmechaniken 10 betätigt und der Taschenboden 3 geöffnet wird.

Die Figuren 7a bis 8c zeigen eine Kupplung 4, welche für die ferngesteuerte Entriegelung geeignet ist. Die Kupplung 4 kann beispielsweise an einer Tasche 1 der Anordnung gemäß Fig. 6 im Bodenbereich 3 angeordnet sein und die beiden gegenüberliegenden und senkrecht zur Förderrichtung X ausgerichteten Taschenwände 2 der Tasche miteinander verbinden. Der Magnetschieber 11 kann eine mechanische Vorspannung in die in der Fig. 8c gezeigte Schließposition aufweisen. Dazu ist bei der Ausführungsform gemäß Fig. 6 eine Spiralfeder 30 vorgesehen, die in der den Magnetschieber 11 aufweisenden Kupplungshälfte 5 aufgenommen ist und im Innern des Gehäuses der Kupplungshälfte 5 an einer Gehäusewand abgestützt ist, durch welche sich der Magnetschieber mit einem Führungszapfen hindurcherstreckt. Die Feder kann alternativ auch im Aktor selbst verbaut sein. Die Kupplungshälften 5, 6 weisen magnetische Elemente 12, 13, 14 auf. Vorzugsweise sind sämtliche magnetischen Elemente 12, 13, 14 als Permanentmagnete ausgebildet. Insbesondere das Magnetelement 13 kann jedoch auch als ein ferromagnetisches Element ausgebildet sein, etwa ein eisenhaltiges Metall aufweisen. In der in Fig. 8c gezeigten Schließposition ist der Magnetschieber 11 mit seinem Betätigungsende 17 um einen maximalen Verstellweg vom Aktor 22 beabstandet, um welchen das Betätigungsende 17 zwischen der Schließposition und der Freigabeposition verstellbar ist. In der Schließposition greift der Haken 15 des Magnetschiebers 11 in die hinterschnittige Hakenaufnahme 16 ein, wobei die hinterschnittige Aufnahme 16 mit einem Vorsprung, welche den von dem Haken 15 hintergriffenen Hinterschnitt bildet, den Haken 15 untergreift und an dem Haken 15 anliegt, sodass die in Fig. 8c gezeigte Schließposition der Stellmechanik 10 reproduzierbar definiert ist. In der in Fig. 7a gezeigten Freigabeposition des Magnetschiebers 11 ist dieser dem Aktor 22 maximal angenähert, so dass der Haken 15 der ersten Kupplungshälfte 5 und die hinterschnittige Hakenaufnahme 16 der zweiten Kupplungshälfte 6 voneinander beabstandet und außer Eingriff gebracht sind so dass die Kupplungshälften 5, 6 in bzw. entgegen der Förderrichtung X voneinander gelöst werden können. Zum Überführen des Magnetschiebers 11 zieht der im gezeigten Beispiel als ziehender Hubmagnet ausgebildete Aktor 22 den Magnetschieber 11 entgegen der Federkraft der Rückstellfeder 30 aus der Schließposition von der hinterschnittigen Hakenaufnahme 16 weg, bezogen auf die Darstellung nach rechts. Selbstverständlich kann der Aktor 22 auch als drückender Hubmagnet ausgebildet sein, wobei die Ausrichtung des Hakens 15 und der Hakenaufnahme 16 sowie die Ausrichtung der Magneten 12-14 entsprechend umgekehrt angeordnet wäre. Zum Ansteuern des Aktors 22 ist eine Steuereinheit 23 vorgesehen, welche mit einem Empfänger 21 verbunden ist bzw. diesen aufweist. Ferner ist ein elektrischer Energiespeicher 24 wie beispielsweise ein Akku vorgesehen, um die Steuereinheit 23, den Empfänger 21 und den Aktor 22 mit Energie zu versorgen. Sobald der Empfänger 21 per Funk ein Signal zum Öffnen des Taschenbodens 3 erhält, wird dieses an die Steuereinheit 23 übermittelt, welche daraufhin den Aktor 22 zum Überführen des Magnetschieber 11 von der Schließposition in die Freigabeposition ansteuert.

Für die Bereitstellung einer Abstoßkraft zwischen den beiden Kupplungshälften 5, 6 in der in Fig. 7a gezeigten Freigabeposition der Stellmechanik 10, können die magnetischen Elemente 12 und 14 jeweils als Permanentmagnet ausgebildet sein und sich mit identischen Polen gegenüberstehen, sodass die beiden Kupplungshälften 5, 6 voneinander abgestoßen werden. Da in der in der Fig. 7a gezeigten Freigabeposition nicht nur die beiden gleichgepolten Permanentmagneten 12, 14 fluchtend einander gegenüberstehen, sondern darüber hinaus auch der Haken 15 aus dem Hinterschnitt der hinterschnittigen Aufnahme 16 herausgelöst ist, können die beiden Kupplungshälften 5, 6 voneinander abgelöst werden, was in Fig. 7b gezeigt ist. Im vorliegenden Fall kann insbesondere die den Haken 15 aufweisende zweite Kupplungshälfte 6 aus einer Formschlussaufnahme der ersten Kupplungshälfte 5 herausgelöst werden. Da in der Freigabeposition gemäß den Figuren 3a und 3b die gleichgepolten Permanentmagnete 12, 14 in der Flucht gegenüberstehen, während der Abstand zwischen den sich anziehenden, entgegengesetzt gepolten magnetischen Elementen 12, 13 gegenüber der Schließposition (siehe Fig. 8c) vergrößert ist, überwiegt die Abstoßung zwischen den Permanentmagneten 12, 14 gegenüber einer gegebenenfalls auch in der Freigabeposition gemäß den Figuren 3a und 3b noch verbleibenden, geringen Anziehungskraft zwischen den magnetischen Elementen 12 und 13.

Nach dem Ablösen der beiden Kupplungshälften 5, 6 voneinander kann die Stellmechanik 10, insbesondere der Magnetschieber 11, wieder die Schließposition einnehmen, wobei er diese Schließposition aufgrund seiner Vorspannung in die Schließposition aufgrund beispielsweise der Rückstellfeder 30 selbsttätig einnimmt. Dies führt dazu, wie in den Figuren 4a und 4b gezeigt ist, dass die entgegengesetzt gepolten magnetischen Elemente 12 und 13 wieder in die Flucht gebracht werden, wobei sie selbst bei der in Fig. 8a gezeigten, teilweise beabstandeten Position aufgrund der Anziehungskraft zwischen den magnetischen Elementen 12 und 13 eine Zentrierung und weitere Annäherung zueinander erfahren, wie dies in Fig. 8b gezeigt ist. Die Ausrichtung der Kupplungshälften 5, 6 zueinander, wie sie in Fig. 8a gezeigt ist, kann beispielsweise der Ausgangszustand sein, welche die beiden Kupplungshälften 5, 6 unmittelbar nach dem Entladevorgang einnehmen, beispielsweise nach dem Entladen an einem Entladeort 200 in einen Rollcontainer 201, wie in Fig. 1 gezeigt ist.

Die Taschenwände 2 der Tasche 1 können beispielsweise aus einem biegeschlaffen Textilmaterial bestehen, sodass die Kupplungshälften 5, 6 die Tasche wie ein Gewicht im Bodenbereich der Taschenwände 2 in die Vertikale bringen, wobei die beiden Taschenwände 2 beispielsweise aufgrund einer ebenfalls im Wesentlichen vertikalen Anordnung eines Öffnungsbügels 7 am oberen Ende der Tasche 1 bereits weitestgehend einander angenähert sind. Ein dann noch verbleibender Restabstand zwischen den Kupplungshälften 5, 6 wie er in Fig. 8a gezeigt ist, kann mit Hilfe der magnetischen Anziehungskraft zwischen den magnetischen Elementen 12, 13 überbrückt werden, sodass die beiden Kupplungshälften 5, 6 die in den Figuren 4a bis 4c gezeigte Annäherung und Verrastung erfahren.

Nachdem die Tasche aufgrund der magnetischen Anziehungskraft zwischen den magnetischen Elementen 12 und 13 soweit einander angenähert sind, sodass der Haken 15 der ersten Kupplungshälfte 5 mit einer Anlaufschräge an einer korrespondierenden Anlaufschräge an einem Hinterschnitt der hinterschnittigen Aufnahme 16 der zweiten Kupplungshälfte 6 zur Anlage kommt, kann aufgrund des in dieser Position verbleibenden, geringen Restabstandes zwischen der in Fig. 8b gezeigten Position und der finalen Schließposition gemäß Fig. 8c die Anziehungskraft zwischen den magnetischen Elementen 12 und 13 ausreichen, um unter Überwindung der Vorspannung des Magnetschiebers 11 in seine in Fig. 8a gezeigten Schließposition der Magnetschieber 11 zumindest soweit aus der Schließposition in Richtung der Freigabeposition, das heißt auf die Darstellung bezogen nach rechts, verlagert wird, dass der Haken 15 mit seiner Hakenspitze den Hinterschnitt der hinterschnittigen Aufnahme 16 hintergreifen kann, wie dies in Fig. 8c gezeigt ist, woraufhin der Magnetschieber 11 dann wieder aufgrund der mechanischen Vorspannung in die in Fig. 8c gezeigte Schließposition überführt wird. In der in Fig. 8c gezeigten vollständigen Verriegelung der beiden Kupplungshälften 5, 6 aneinander sind die beiden komplementär gepolten magnetischen Elemente 12, 13 maximal angenähert, während zwischen den gleichgepolten Magneten 12 und 14 ein lateraler Abstand besteht, welcher aufgrund der senkrecht zur Polfläche propagierenden Magnetfeldlinien ausreichend ist, um eine Abstoßung zwischen den Magneten 12, 14 auf ein zulässiges Mindestmaß zu verringern.

### Bezugszeichenliste:

- 1: Tasche
- 2: Taschenwände
- 3: Taschenboden
- 4: Kupplung
- 5: Kupplungshälfte
- 6: Kupplungshälfte
- 7: Bügel
- 8: Rollcarrier
- 9: Beladeöffnung
- 10: Stellmechanik
- 11: Magnetschieber
- 12: Erstes magnetisches Element
- 13: Zweites magnetisches Element
- 14: Drittes magnetisches Element
- 15: Haken
- 16: Hakenaufnahme
- 17: Betätigungsende
- 20: Betätigungsmittel
- 21: Empfänger
- 22: Aktor
- 23: Steuereinheit
- 24: elektrischer Energiespeicher
- 30: Rückstellfeder
- 40: Ansteuerungseinrichtung
- 50: Taschenverfolgungseinrichtung
- 100: Hängeförderer
- 101: Förderschiene
- 102: Weiche
- 103: Schrägförderer
- 104: Entladearbeitsplatz
- 105: Stauförderer
- 106: Überfüllsensor
- 107: Transferförderer
- 108: Übergang Transferförderer auf Stauförderer
- 200: Frei bestimmbarer Entladeort
- 201: Rollcontainer
- 301: dynamischer Puffer
- 302: dynamischer Batch-Puffer
- 303: Beladestation
- 304: Sortiermatrix
- 305: Packpuffer
- 306: Packstation
- 307: Leertaschenpuffer
- 308: Kommissionierer
- 309: Lager
- 310: Übergabestelle
- 311: Retouren
- 312: Endstelle/Behälter
- 313: autonomer mobiler Roboter
- 320: Wareneinheit
- 321: Zuordnungsmatrix
- 322: Rutsche
- 323: Arbeiter
- 330: Endstellenmodul
- 1000: Sortieranordnung
- A: Vergrößerungsausschnitt
- X: Förderrichtung

## Patentansprüche

1. Tasche (1) für einen Hängeförderer (100), welche zwei Taschenwände (2) aufweist, die an einem Taschenboden (3) lösbar miteinander verbunden sind, wobei die Tasche (1) zumindest eine Stellmechanik (10) zum Lösen der am Taschenboden (3) verbundenen Taschenwände (2) voneinander zum Ausbilden einer Entladeöffnung aufweist, wobei die Tasche (1) ein Betätigungsmittel (20) aufweist, welches dazu eingerichtet ist, in Reaktion auf ein entsprechendes Signal, typischerweise ein Datensignal, die zumindest eine Stellmechanik (10) so zu betätigen, so dass der Taschenboden (3) geöffnet wird, wobei das Betätigungsmittel (20) einen Aktor (22) zum Betätigen der zumindest einen Stellmechanik (10) und eine mit dem Aktor (22) verbundene Steuereinheit (23) aufweist, **dadurch gekennzeichnet, dass** das Betätigungsmittel (20) einen mit der Steuereinheit (23) verbundenen Speicher zum Speichern von zumindest einer vorbestimmten Taschenposition zum Öffnen der Tasche aufweist, wobei das Betätigungsmittel ferner entweder eine Positionsbestimmungseinheit zum Bestimmen einer derzeitigen Taschenposition aufweist und/oder das Betätigungsmittel (20) fernsteuerbar ist, das Signal ein Funksignal ist, das Betätigungsmittel (20) einen mit der Steuereinheit (23) verbundenen Empfänger (21) zum Erhalten des Funksignals aufweist und der Empfänger (21) zum Erhalten der derzeitigen Taschenposition eingerichtet ist, wobei die Steuereinheit (23) dazu eingerichtet ist, bei Feststellen des Erreichens der zumindest einen vorbestimmten Taschenposition zum Öffnen der Tasche den Aktor (22) so anzusteuern, dass durch diesen die zumindest eine Stellmechanik (10) betätigt und der Taschenboden (3) geöffnet wird.

2. Tasche (1) nach Anspruch 1, wobei die Steuereinheit (23) dazu eingerichtet ist, bei oder nach Erhalt des Signals den Aktor (22) so anzusteuern, dass durch diesen die zumindest eine Stellmechanik (10) betätigt und der Taschenboden (3) geöffnet wird.

3. Tasche (1) nach Anspruch 1 oder 2, wobei die Steuereinheit (23) dazu eingerichtet ist, bei oder nach Erhalt des Funksignals durch den Empfänger (21) den Aktor (22) so anzusteuern, dass durch diesen die zumindest eine Stellmechanik (10) betätigt und der Taschenboden (3) geöffnet wird.

4. Tasche (1) nach einem der vorangehenden Ansprüche, wobei der Aktor (22) ein elektrischer Aktor, vorzugsweise ein Hubmagnet, ist.

5. Tasche (1) nach einem der vorangehenden Ansprüche, wobei die zumindest eine Stellmechanik (10) ferner zumindest ein Schließmittel aufweist, welches zum automatischen Verschließen des Taschenbodens (3) nach Entladen von in der Tasche (1) transportierter Ware eingerichtet ist bzw. sobald die Taschenwände (2) der Tasche (1) nach dem Entladen wieder aneinander angenähert sind.

6. Tasche (1) nach einem der vorangehenden Ansprüche, bei der der Taschenboden (3) von einer Kupplung (4) gebildet ist, mit der die Taschenwände (2) lösbar miteinander verbunden sind, wobei jede Seitenwand (2) eine von zwei Kupplungshälften (5, 6) der Kupplung (4) aufweist.

7. Tasche (1) nach Anspruch 6, bei der die zumindest eine Stellmechanik (10) zwischen einer Schließposition, in der die Kupplungshälften (5, 6), insbesondere formschlüssig, aneinander festgelegt sind, und einer Freigabeposition, in der die Kupplungshälften (5, 6) voneinander gelöst sind, verstellbar ist, wobei die zumindest eine Stellmechanik (10) ein durch den Aktor (22) angesteuertes Betätigungsende (17) aufweist.

8. Tasche nach Anspruch 7, bei der das Schließmittel eine Rückstellfeder (30) zum Rücküberführen der Stellmechanik (10) in die Schließposition aufweist.

9. Tasche nach einem der Ansprüche 7 oder 8, wobei die zumindest eine Stellmechanik (10) in einer der Kupplungshälften (5,6) aufgenommen ist und das Betätigungsmittel (20) in derselben oder der anderen der Kupplungshälften (5,6) aufgenommen ist.

10. Tasche nach einem der vorangehenden Ansprüche, wobei dem Betätigungsmittel (20) ferner ein elektrischer Energiespeicher (24) zum Versorgen des Betätigungsmittels (20) mit elektrischer Energie zugeordnet ist.

11. Tasche nach einem der Ansprüche 6 bis 10, wobei die Kupplung zwei, insbesondere gegenläufige, Stellmechaniken aufweist, und wobei das Betätigungsmittel (20) zwei Aktoren (22) aufweist, von welchen einer der ersten Stellmechanik (10) und der andere der zweiten Stellmechanik (10) zugeordnet ist.

12. Tasche nach Anspruch 11, bei der das Betätigungsmittel (20) zwischen der ersten und der zweiten Stellmechanik (10) angeordnet ist, wobei der erste der Aktoren (22) in Richtung der ersten Stellmechanik (10) und der zweite der Aktoren (22) in die entgegengesetzte Richtung bzw. in Richtung der zweiten Stellmechanik (10) wirkt.

13. Tasche nach einem der vorangehenden Ansprüche, bei der die Taschenwände (2) an dem Taschenboden (3) jeweils mindestens ein magnetisches Element (12, 13, 14) aufweisen, die einander anziehen, wobei das magnetische Element (12, 13, 14) einer ersten der beiden Taschenwände (2) ein Permanentmagnet und das magnetische Element (12, 13, 14) einer zweiten der beiden Taschenwände (2) ein ferromagnetisches Metall oder ein Permanentmagnet mit in Bezug auf den Permanentmagnet der ersten der beiden Taschenwände (2) entgegengesetzter Polung ist.

14. Tasche (1) nach Anspruch 13, bei der die Stellmechanik (10) mindestens einen Magnetschieber (11) aufweist, an dem das mindestens eine magnetische Element (12, 13, 14), vorzugsweise ein Permanentmagnet, in einer der beiden Kupplungshälften (5, 6) angeordnet ist, wobei mit dem Magnetschieber (11) ein Abstand dieses magnetischen Elements (12, 13, 14) in Bezug auf das mindestens eine magnetische Element (12, 13, 14) der anderen Kupplungshälfte (5, 6) verstellbar ist.

15. Hängeförderer (100) mit zumindest einer Tasche (1) nach einem der vorangehenden Ansprüche, aufweisend eine Förderstrecke, entlang welcher die Tasche bewegt wird, und eine Ansteuereinrichtung (40) zum Aussenden eines Funksignals zum Öffnen des Taschenbodens (3) der zumindest einen Tasche (1) an einer Position entlang der Förderstrecke, an welcher die Tasche (1) geöffnet werden soll, wobei der Hängeförderer (100) ferner eine mit der Ansteuereinrichtung (40) verbundenen Taschenverfolgungseinrichtung (50), welche dazu eingerichtet ist, die Position der zumindest einen Tasche (1) entlang der Förderstrecke zu bestimmen, so dass die Ansteuereinrichtung (40) das fernsteuerbare Betätigungsmittel (20) zum Öffnen des Taschenbodens veranlassen kann, sobald die zumindest eine Tasche (1) eine vorbestimmbare Sollposition (200) entlang der Förderstrecke erreicht.

16. Verfahren zum Betreiben eines Hängeförderers nach Anspruch 15, aufweisend die Schritte:
Fördern zumindest einer Tasche entlang der Förderstrecke des Hängeförderers;
Bestimmen einer Sollposition entlang der Förderstrecke, an welcher die Tasche geöffnet werden soll;
Übersenden eines auf die Sollposition bezogenen Datensignals von der Ansteuereinrichtung an die Tasche, wobei das auf die Sollposition bezogene Datensignal entweder ein Signal zum Ansteuern des Betätigungsmittels zum Öffnen des Taschenbodens ist und bei Erreichen oder bei Annäherung an die Sollposition seitens der Ansteuereinrichtung ausgesendet wird oder wobei das Datensignal eine Ortsinformation der Sollposition ist, bei deren Erreichen die Tasche autonom das Betätigungsmittel zum Öffnen des Taschenboden ansteuert;
Autonomes Öffnen des Taschenbodens an der Sollposition.

## Claims

1. Pouch (1) for an overhead conveyor (100), which has two pouch walls (2) which are releasably connected to one another at a pouch base (3), wherein the pouch (1) has at least one actuating mechanism (10) for releasing the pouch walls (2) connected to the pouch base (3) from one another in order to form an unloading opening, wherein the pouch (1) has an actuating means (20) which is configured to actuate the at least one actuating mechanism (10) in response to a corresponding signal, typically a data signal, such that the pouch base (3) is opened, wherein the actuating means (20) has an actuator (22) for actuating the at least one actuating mechanism (10) and a control unit (23) connected to the actuator (22), **characterized in that** the actuating means (20) has a memory connected to the control unit (23) for storing at least one predetermined pouch position for opening the pouch, wherein the actuating means furthermore either has a position determination unit for determining a current pouch position and/or the actuating means (20) can be remotely controlled, the signal is a radio signal, the actuating means (20) has a receiver (21) connected to the control unit (23) for receiving the radio signal and the receiver (21) is configured to receive the current pouch position, wherein the control unit (23) is configured, when it is determined that the at least one predetermined pouch position for opening the pouch has been reached, to actuate the actuator (22) such that the at least one actuating mechanism (10) is actuated by said actuator and the pouch base (3) is opened.

2. Pouch (1) according to claim 1, wherein the control unit (23) is configured, when or after receiving the signal, to actuate the actuator (22) such that the at least one actuating mechanism (10) is actuated by said actuator and the pouch base (3) is opened.

3. Pouch (1) according to claim 1 or 2, wherein the control unit (23) is configured, when or after receiving the radio signal by the receiver (21), to actuate the actuator (22) such that the at least one actuating mechanism (10) is actuated by said actuator and the pouch base (3) is opened.

4. Pouch (1) according to one of the preceding claims, wherein the actuator (22) is an electric actuator, preferably a solenoid.

5. Pouch (1) according to one of the preceding claims, wherein the at least one actuating mechanism (10) furthermore has at least one closing means which is configured for automatically closing the pouch base (3) after unloading goods transported in the pouch (1) or as soon as the pouch walls (2) of the pouch (1) are moved closer to one another again after unloading.

6. Pouch (1) according to one of the preceding claims, wherein the pouch base (3) is formed by a coupling (4) by means of which the pouch walls (2) are releasably connected to one another, wherein each side wall (2) has one of two coupling halves (5, 6) of the coupling (4).

7. Pouch (1) according to claim 6, wherein the at least one actuating mechanism (10) is adjustable between a closed position, in which the coupling halves (5, 6) are fixed to one another, in particular in a form-fitting manner, and a release position, in which the coupling halves (5, 6) are released from one another, wherein the at least one actuating mechanism (10) has an actuating end (17) actuated by the actuator (22).

8. Pouch according to claim 7, wherein the closing means has a restoring spring (30) for returning the actuating mechanism (10) into the closed position.

9. Pouch according to one of claims 7 or 8, wherein the at least one actuating mechanism (10) is received in one of the coupling halves (5, 6) and the actuating means (20) is received in the same or the other of the coupling halves (5, 6).

10. Pouch according to one of the preceding claims, wherein the actuating means (20) is furthermore assigned an electric energy store (24) for supplying the actuating means (20) with electric energy.

11. Pouch according to one of claims 6 to 10, wherein the coupling has two actuating mechanisms, in particular opposing actuating mechanisms, and wherein the actuating means (20) has two actuators (22), of which one is assigned to the first actuating mechanism (10) and the other is assigned to the second actuating mechanism (10).

12. Pouch according to claim 11, wherein the actuating means (20) is arranged between the first and the second actuating mechanism (10), wherein the first of the actuators (22) acts in the direction of the first actuating mechanism (10) and the second of the actuators (22) acts in the opposite direction or in the direction of the second actuating mechanism (10).

13. Pouch according to one of the preceding claims, wherein the pouch walls (2) on the pouch base (3) each have at least one magnetic element (12, 13, 14) which attract one another, wherein the magnetic element (12, 13, 14) of a first of the two pouch walls (2) is a permanent magnet and the magnetic element (12, 13, 14) of a second of the two pouch walls (2) is a ferromagnetic metal or a permanent magnet with opposite polarity with respect to the permanent magnet of the first of the two pouch walls (2).

14. Pouch (1) according to claim 13, wherein the actuating mechanism (10) has at least one magnetic slide (11) on which the at least one magnetic element (12, 13, 14), preferably a permanent magnet, is arranged in one of the two coupling halves (5, 6), wherein a distance of this magnetic element (12, 13, 14) with respect to the at least one magnetic element (12, 13, 14) of the other coupling half (5, 6) is adjustable with the magnetic slide (11).

15. Overhead conveyor (100) having at least one pouch (1) according to one of the preceding claims, having a conveying section along which the pouch is moved, and an actuating device (40) for emitting a radio signal for opening the pouch base (3) of the at least one pouch (1) at a position along the conveying section at which the pouch (1) is to be opened, wherein the overhead conveyor (100) furthermore has a pouch tracking device (50) which is connected to the actuating device (40) and which is configured to determine the position of the at least one pouch (1) along the conveying section such that the actuating device (40) can cause the remotely controllable actuating means (20) to open the pouch base as soon as the at least one pouch (1) reaches a predeterminable desired position (200) along the conveying section.

16. Method for operating an overhead conveyor according to claim 15, having the steps:
conveying at least one pouch along the conveying section of the overhead conveyor;
determining a desired position along the conveying section at which the pouch is to be opened;
transmitting a data signal relating to the desired position from the actuating device to the pouch, wherein the data signal relating to the desired position is either a signal for actuating the actuating means for opening the pouch base and is emitted by the actuating device when the desired position is reached or when the desired position is approached, or wherein the data signal is location information of the desired position, when the desired position is reached, the pouch autonomously actuating the actuating means for opening the pouch base;
autonomously opening the pouch base at the desired position.

## Revendications

1. Poche (1) pour un convoyeur suspendu (100), qui présente deux parois de poche (2) qui sont reliées entre elles de manière amovible sur un fond de poche (3), la poche (1) présentant au moins un mécanisme de réglage (10) pour détacher les parois de poche (2) reliées au fond de poche (3) l'une de l'autre afin de former une ouverture de déchargement, la poche (1) présentant un moyen d'actionnement (20) qui est conçu pour actionner, en réponse à un signal correspondant, typiquement un signal de données, l'au moins un mécanisme de réglage (10) de telle sorte que le fond de poche (3) s'ouvre, le moyen d'actionnement (20) présentant un actionneur (22) pour actionner l'au moins un mécanisme de réglage (10) et une unité de commande (23) reliée à l'actionneur (22), **caractérisé en ce que** le moyen d'actionnement (20) comprend une mémoire reliée à l'unité de commande (23) pour enregistrer au moins une position prédéterminée de la poche pour l'ouverture de celle-ci,
le moyen d'actionnement présentant en outre soit une unité de détermination de la position pour déterminer une position actuelle de la poche, et/ou le moyen d'actionnement (20) étant télécommandable, le signal étant un signal radio, le moyen d'actionnement (20) étant équipé d'un récepteur (21) relié à l'unité de commande (23) pour recevoir le signal radio, et le récepteur (21) étant agencé pour recevoir la position actuelle de la poche, l'unité de commande (23) étant conçue pour, lors de la détection de l'atteinte de l'au moins une position prédéterminée de la poche, commander l'actionneur (22) de manière à ce que celui-ci actionne l'au moins un mécanisme de réglage (10) et ouvre le fond de poche (3).

2. Poche (1) selon la revendication 1, l'unité de commande (23) étant conçue pour commander l'actionneur (22) lors de la réception du signal ou après celle-ci, de telle sorte que celui-ci actionne le ou les mécanismes de réglage (10) et ouvre le fond de poche (3).

3. Poche (1) selon la revendication 1 ou 2, l'unité de commande (23) étant conçue pour commander l'actionneur (22) lors de la réception du signal radio par le récepteur (21) ou après celle-ci, de telle sorte que celui-ci actionne le ou les mécanismes de réglage (10) et ouvre le fond de poche (3).

4. Poche (1) selon l'une des revendications précédentes, l'actionneur (22) étant un actionneur électrique, de préférence un électroaimant.

5. Poche (1) selon l'une des revendications précédentes, le ou plusieurs mécanismes de réglage (10) comprenant en outre au moins un moyen de fermeture qui est agencé pour fermer automatiquement le fond de poche (3) après le déchargement des marchandises transportées dans la poche (1) ou dès que les parois (2) de la poche (1) sont à nouveau rapprochées les unes des autres après le déchargement.

6. Poche (1) selon l'une des revendications précédentes, dans laquelle le fond de poche (3) est formé par un accouplement (4) avec lequel les parois de poche (2) sont reliées entre elles de manière amovible, chaque paroi latérale (2) présentant l'une des deux moitiés (5, 6) de l'accouplement (4).

7. Poche (1) selon la revendication 6, dans laquelle l'au moins un mécanisme de réglage (10) est réglable entre une position de fermeture, dans laquelle sont fixées les moitiés d'accouplement (5, 6), en particulier par complémentarité de forme et une position de libération, dans laquelle les moitiés d'accouplement (5, 6) sont détachées l'une de l'autre, l'au moins un mécanisme de réglage (10) présentant une extrémité d'actionnement (17) commandée par l'actionneur (22).

8. Poche selon la revendication 7, dans laquelle le moyen de fermeture présente un ressort de rappel (30) pour ramener le mécanisme de réglage (10) dans la position de fermeture.

9. Poche selon l'une des revendications 7 ou 8, dans laquelle le ou les mécanismes de réglage (10) sont logés dans l'une des moitiés d'accouplement (5, 6) et le moyen d'actionnement (20) est logé dans la même moitié d'accouplement ou dans l'autre moitié d'accouplement (5, 6).

10. Poche selon l'une des revendications précédentes, dans laquelle un accumulateur d'énergie électrique (24) est en outre associé au moyen d'actionnement (20) pour alimenter le moyen d'actionnement (20) en énergie électrique.

11. Poche selon l'une des revendications 6 à 10, l'accouplement présentant deux mécanismes de réglage, en particulier à mouvement opposé, et le moyen d'actionnement (20) présentant deux actionneurs (22) dont l'un est associé au premier mécanisme de réglage (10) et l'autre au deuxième mécanisme de réglage (10).

12. Poche selon la revendication 11, dans laquelle le moyen d'actionnement (20) est agencé entre le premier et le deuxième mécanismes de réglage (10), le premier actionneur (22) agissant en direction du premier mécanisme de réglage (10) et le deuxième actionneur (22) agissant dans la direction opposée, c'est-à-dire en direction du deuxième mécanisme de réglage (10).

13. Poche selon l'une des revendications précédentes, dans lequel les parois de poche (2) présentent chacune au moins un élément magnétique (12, 13, 14) sur le fond de poche (3) qui s'attirent mutuellement, l'élément magnétique (12, 13, 14) d'une première des deux parois de poche (2) étant un aimant permanent et l'élément magnétique (12, 13, 14) d'une deuxième paroi de poche (2) étant un métal ferromagnétique ou un aimant permanent de polarité opposée à celle de l'aimant permanent de la première des deux parois de poche (2).

14. Poche (1) selon la revendication 13, dans laquelle le mécanisme de réglage (10) présente au moins un coulisseau magnétique (11) sur lequel est agencé l'au moins un élément magnétique (12, 13, 14), de préférence un aimant permanent, dans l'une des deux moitiés d'accouplement (5, 6), le coulisseau magnétique (11) permettant de régler la distance de cet élément magnétique (12, 13, 14) par rapport à l'au moins un élément magnétique (12, 13, 14) de l'autre moitié d'accouplement (5, 6).

15. Convoyeur suspendu (100) avec au moins une poche (1) selon l'une des revendications précédentes, présentant un trajet de convoyage le long duquel la poche est déplacée, et un dispositif d'activation (40) pour émettre un signal radio afin d'ouvrir le fond de poche (3) de l'au moins une poche (1) à une position le long du trajet de convoyage à laquelle la poche (1) doit être ouverte, le convoyeur suspendu (100) comportant en outre un dispositif de suivi de poche (50) relié au dispositif d'activation (40) qui est conçu pour déterminer la position de l'au moins une poche (1) le long du trajet de convoyage, de telle sorte que le dispositif d'activation (40) puisse actionner le moyen d'actionnement télécommandé (20) pour ouvrir le fond de poche dès que l'au moins une poche (1) atteint une position de consigne prédéterminée (200) le long du trajet de convoyage.

16. Procédé pour faire fonctionner un convoyeur suspendu selon la revendication 15, comprenant les étapes suivantes :
convoyage d'au moins une poche le long du trajet de convoyage du convoyeur suspendu ;
détermination d'une position de consigne le long du trajet de convoyage à laquelle la poche doit être ouverte ;
transmission d'un signal de données se rapportant à la position de consigne depuis le dispositif de commande sur la poche, le signal de données se rapportant à la position de consigne étant soit un signal destiné à commander le moyen d'actionnement pour ouvrir le fond de poche et émis par le dispositif de commande lorsque la position de consigne est atteinte ou que l'on s'en approche, soit une information de localisation de la position de consigne, à l'atteinte de laquelle la poche commande de manière autonome le moyen d'actionnement pour ouvrir le fond de poche ;
ouverture autonome du fond de poche à la position souhaitée.
